# EUROPEAN PATENT SPECIFICATION

(11) **EP 3 056 387 B1**
(45) Date of publication and mention of the grant of the patent: **25.04.2018**
(21) Application number: 15155085.2
(22) Date of filing: 13.02.2015
(51) Int. Cl.: B60R 1/08, B60R 1/04

(54) **REAR-VIEW MIRROR ASSEMBLIES AND SYSTEMS FOR MOTOR VEHICLES, AND INSTALLATION METHOD**
RÜCKBLICKSPIEGELANORDNUNGEN UND SYSTEME FÜR KRAFTFAHRZEUGE SOWIE INSTALLATIONSVERFAHREN
ENSEMBLES ET SYSTÈMES DE RÉTROVISEURS POUR VÉHICULES AUTOMOBILES ET PROCÉDÉ D'INSTALLATION

(43) Date of publication of application: 17.08.2016
(73) Proprietor: Fico Mirrors S.A., 08028 Barcelona (ES)
(72) Inventor: Gómez Timonera, David, 08232 Viladecavalls (ES); Lorival, Frédéric, 08232 Viladecavalls (ES); López Galera, Robert, 08232 Viladecavalls (ES)
(74) Representative: ZBM Patents - Zea, Barlocci & Markvardsen

(56) References cited:
- EP-A1- 2 789 505
- WO-A1-2004/012963
- US-A1- 2014 368 657

## Description

Rear-view mirror assemblies and rear-view mirror systems for motor vehicles including a rear-view camera device are disclosed herein. A method for installing said rear-view mirror assemblies and systems in motor vehicles is also disclosed herein.

### BACKGROUND

Rear-view mirror systems for motor vehicles are known in the art combining a rear-view mirror device and a rear-view camera device. The rear-view camera device is used together with the rear-view mirror device and it may comprise, for example, a video camera to be located in a rear part of the vehicle oriented toward a rear area outside the vehicle for capturing a field of view of the vehicle rear.

The rear-view mirror device usually comprises a mirror housing inside of which a display and a one-way mirror, also referred to as a half mirror, are provided. The one-way mirror comprises a front and a back surface and is positioned within the mirror housing such that the display is located adjacent to, but not necessarily in contact with, the rear surface of the one-way mirror. The mirror housing is adjustably mounted inside the motor vehicle through a pivot joint or swivel mount. The housing can thus be pivoted, e.g. tilted, by the user relative to the interior portion of the vehicle in order to adjust the height and viewing angle as required.

Thus the user can choose between having an image displayed from the camera on the display and having an image reflected on the one-way mirror as desired.

Indeed, when the display is switched on, the light intensity received by the back surface of the half mirror from the display is greater than the light intensity received by the front surface of the half mirror from the exterior. As a result, the image displayed by the display is viewable through the half mirror by the user.

If the display is switched off, the light intensity received by the front surface of the half mirror from the exterior is greater than the light intensity received from the back surface of the half mirror as the display is unlit. As a result, the half mirror acts as a conventional mirror.

However, such known rear-view mirror systems have the disadvantage that when the display is switched on, the image reflected by the half-mirror is still perceived by the driver, causing a disturbing double image effect. This results in discomfort of the driver and sometimes even in dizziness.

Solutions have been provided in the prior art consisting in pivoting the mirror housing in order to tilt the rear-view mirror device such that the light incident on the half-mirror is deviated from the driver's field of view. The half-mirror angle of inclination is such that it still allows the driver to see the image that is displayed by the display.

Inclination of the rear-view mirror device is usually performed in two mirror housing predefined angular positions. In a first mirror housing angular position, the display is switched on and the half-mirror is arranged such that the light incident on the half-mirror is deviated from the driver's field of view. In a second mirror housing angular position, the display is switched off and the half-mirror acts as a conventional mirror, reflecting external images.

In EP2789505 that discloses a rear-view mirror assembly according to the preamble of claim 1, the display is switched on/off by means of an interlocking lever while, at the same time, the mirror housing angular position is changed. Again, the mirror housing can be positioned in two different, stable angular positions which are factory predefined: in a first mirror housing angular position the display is switched off and the image is reflected from the half-mirror, and a second mirror housing angular position the display is switched on and the image is displayed by the display, with no external image being reflected from the half-mirror.

Therefore, the two mirror housing angular positions are always predefined and set during manufacturing. Said predefined mirror housing angular positions cannot be thus subsequently varied by the user and/or the manufacturer. This has been found to be problematic as the same vehicle model may be provided or not with reflecting elements on the ceiling, such as a sunroof or a moonroof. This may result in that for certain vehicle models the mirror housing may be positioned according to an inadequate angle of inclination so as to avoid the above mentioned double image effect. As a consequence, in many cases such prior art rear-view devices may require two rear-view mirrors for the same vehicle model. This undesirably increases manufacturing complexity and costs.

### SUMMARY

A rear-view mirror assembly for motor vehicles such as cars, vans and the like, having the features of claim 1, is disclosed herein which has been found that it at least partially overcomes the above disadvantages of the prior art rear-view mirror devices.

The present rear-view mirror assembly includes a mirror housing that is pivotally fixed to a vehicle inner support. Said vehicle inner support may be a swivel mount fixed to the interior of the motor vehicle such as, for example, the windshield or the roof. The mirror housing may comprise a frame and a rear cover. A rubber pad may be also provided enclosing the half-mirror to improve adjustment with the frame. In some cases, a frameless mirror housing might be provided where the half-mirror extends to the edge of the rear cover to be attached thereto. In the latter cases, the half mirror's periphery may be bevelled.

Inside the mirror housing a half-mirror and a display are received. The half-mirror is suitable for a driver or a vehicle passenger to look toward the rear of the motor vehicle. The half-mirror is an ordinary mirror that is coated on its back surface with a thin layer of metal oxides such that a certain amount of light is reflected allowing the rest of the light to pass through.

The display is mounted inside the housing in a position substantially parallel to the half-mirror. The display may be, for example, a LED display. It may comprise a back light unit including a light guide and a light source. The light source comprises a set of LEDs for generating and directing light, a rear polarizer for polarizing the light in a first direction, a LCD open cell which is divided into pixels that receive information of light intensity and RGB code, and a front polarizer for polarizing the light in a second direction.

The display is configured to display the rear view field captured by the rear-view camera. The rear image displayed by the display is intended to replace the rear image of the half-mirror as it has substantially the same focal distance as the driver when looking at objects through the rear-view device.

A driving plate is also provided. The driving plate is pivotally coupled to the mirror housing and adapted for attachment to the vehicle inner support. For this purpose, the driving plate may include a vehicle attaching portion having a ball socket for attachment to a ball formed in the vehicle inner support thus forming a ball and socket joint. This allows the mirror housing to be manually adjusted by the user for adjusting the field of view.

In order to pivot or tilt the mirror housing, an actuator switch lever is provided. The actuator switch lever is arranged protruding out from the mirror housing through a recess formed therein. The actuator switch lever is pivotally attached to the driving plate for moving, e.g. pivoting or tilting, the mirror housing in at least two different angular positions while causing the display to be switched on or off depending on said mirror housing angular positions. The actuator switch lever is also pivotally attached to the housing rear cover.

The present rear-view mirror assembly is further provided with an adjustable positioning mechanism. The purpose of the adjustable positioning mechanism is to adjust at least one of said mirror housing angular positions. The adjustable positioning mechanism may be adapted to adjust the angle defined by a plane of the half-mirror in two different mirror housing angular positions. The angle defined by said plane of the half-mirror in the above mentioned mirror housing angular positions may be adjusted by the adjustable positioning mechanism in a range of, for example, between 3° and 9°. Other range of angular positions is of course not ruled out, depending on requirements.

In one example, the adjustable positioning mechanism may comprise a gear driven mechanism. The gear driven mechanism may comprise, for example, a rod coupled, through a gear wheel, to a displaceable rack. Specifically, the gear driven mechanism may consist of a rod rotatably mounted in the mirror housing meshing with a gear wheel. The gear wheel is in turn rotatably mounted in the mirror housing and meshing with the displaceable rack. Rotation of the rod by the user or the manufacturer from outside the mirror housing causes rotation of the gear wheel, which in turn causes the rack to be displaced. This in turn defines end positions of the driving plate and consequently angular end positions of the mirror housing.

A disengaging mechanism may be provided. In general, the disengaging mechanism is intended to cause the rod to freely rotate so as not to cause displacement of the rack. In other words, with such disengaging mechanism the rod is disengaged either from the gear wheel or the rack resulting in that rotation of the rod does not cause displacement of the rack. In one specific example the disengaging mechanism may comprise a sliding portion allowing the rod to slide in and out of the rear cover of the mirror housing according to a rod engagement position and a rod disengagement position. In the rod disengagement position, the rod does not engage the gear wheel such that the rod freely rotates and does not cause displacement of the rack. In the rod engagement position, the rod engages the gear wheel such that rotation of the rod causes displacement of the rack.

The above example of the adjustable positioning mechanism comprising a gear driven mechanism allows the range of mirror housing angular positions to be easily changed by the user or the manufacturer from outside of the mirror housing.

In a further example of the adjustable positioning mechanism, it may comprise a sliding member displaceably mounted in the mirror housing. The sliding member may comprise a base body with at least one wedged portion. The wedged portion is adapted to abut the driving plate, for example corresponding wedged portions of the driving plate, causing the driving plate to be locked in different mirror housing angular positions as desired. The wedged portions of at least one of the sliding member and the driving plate may be at least partially stepped, e.g. serrated or the like, so as to better adjust the angle defined by the plane of the half-mirror in at least two discrete, different mirror housing angular positions.

In the above example of the adjustable positioning mechanism, the rear cover of the mirror housing may have an opening for driving the sliding member from the outside easily. This allows the range of mirror housing angular positions to be easily changed by the user or the manufacturer from outside of the mirror housing as desired.

The driving plate may have a contact portion which may include, for example, a protrusion, adapted for contacting at least one electrical contact provided in or associated with the display. This will cause opening or closing of an electrical circuit and thus switching the display on or off depending on the angular position of the mirror housing relative to the driving plate according to actuation of the actuator switch lever.

With the above configuration for the present rear-view mirror assembly, the actuator switch lever is rotated by the user in order to pivot or tilt the mirror housing and switching the display on or off.

The driving plate, the vehicle inner support and the mirror housing are designed such that the force required to rotate the driving plate relative to the vehicle inner support is greater than the force required to rotate the driving plate relative to the mirror housing. This results in that rotation of the actuator switch lever does not cause rotation of the driving plate but rotation of the mirror housing. Therefore, rotation of the actuator switch lever causes the half-mirror to be displaced from a first mirror housing angular position to a second mirror housing angular position through a determined angle.

When the mirror housing is in any of said mirror housing angular positions, the protrusion in the driving plate may, or may not, contact the above mentioned electrical contact so as to switch off or on the display as stated above. In one particular example of the switch, in a first mirror housing angular position the contact portion in the driving plate contacts the electrical contact such that the electric circuit is open and the display is switched off, and in a second mirror housing angular position the contact portion in the driving plate does not contact the electrical contact such that the electric circuit is closed and the display is switched on. Other different configurations for the switch are of course possible.

A rear-view mirror system for motor vehicles is also provided herein comprising the above described rear-view mirror assembly. The present rear-view mirror system further includes a rear-view camera device for capturing images from the outside of the vehicle to be displayed on the display. The rear-view camera device may comprise at least one camera such as a video camera adapted and arranged for capturing images from the outside of the vehicle, e.g. for capturing a field of view of the vehicle rear. The camera of the rear-view camera device is connected to the display of the rear-view mirror assembly.

A method for installing the above rear-view mirror assembly in a motor vehicle is also disclosed herein. The method comprises providing the above rear-view mirror assembly and adjusting the adjustable positioning mechanism of the rear-view mirror assembly for determining at least one mirror housing angular position. In a preferred example, said mirror housing angular position may be one causing the display to be switched off. Then, other, different mirror housing angular positions could cause the display to be switched on.

It is thus clear that the present rear-view mirror assembly and system does not have predefined, fixed mirror housing angular end positions but the mirror housing angular end positions may be varied in a range of angular positions as required by the user of manufacturer. In one example, a first mirror housing angular position can be fixedly predefined, while other mirror housing angular position can be easily varied as desired or required by the user and/or the manufacturer.

Additional objects, advantages and features of examples of the present rear-view mirror assembly and system for motor vehicles together with the disclosed method of installation will become apparent to those skilled in the art upon examination of the description, or may be learned by practice thereof.

### BRIEF DESCRIPTION OF THE DRAWINGS

Particular examples of the present rear-view mirror system for motor vehicles will be described in the following by way of non-limiting examples, with reference to the appended drawings.

In the drawings:
Figure 1 is an elevational sectional view of one example of the present rear-view mirror assembly with the actuator switch lever shown such that the mirror housing is in a first mirror housing angular position where the display is switched off;
Figure 2 is an elevational sectional view of the example of the rear-view mirror assembly shown in figure 1 with the actuator switch lever shown such that the mirror housing is in a second mirror housing angular position where the display is switched on;
Figures 3-5 are diagrammatic views of the rear-view mirror assembly in different mirror housing angular positions where a first example of the adjustable positioning mechanism is shown;
Figure 6 is a diagrammatic view of the rear-view mirror assembly where a second example of the adjustable positioning mechanism is shown;
Figure 6a is an enlarged detail view of the second example of the adjustable positioning mechanism in figure 6 where the gear driven mechanism is shown;
Figure 7 is a rear elevational view of the back cover of the mirror housing according to the first example of the adjustable positioning mechanism;
Figures 8 and 9 are elevational views showing two different examples of the sliding member according to the first example of the adjustable positioning mechanism shown in figure 7; and
Figure 10 is an elevational view of a car as an example of a motor vehicle to which the present rear-view mirror system can be applied.

### DETAILED DESCRIPTION OF EXAMPLES

In the examples shown, like reference numerals refer to like parts throughout the description of the drawings.

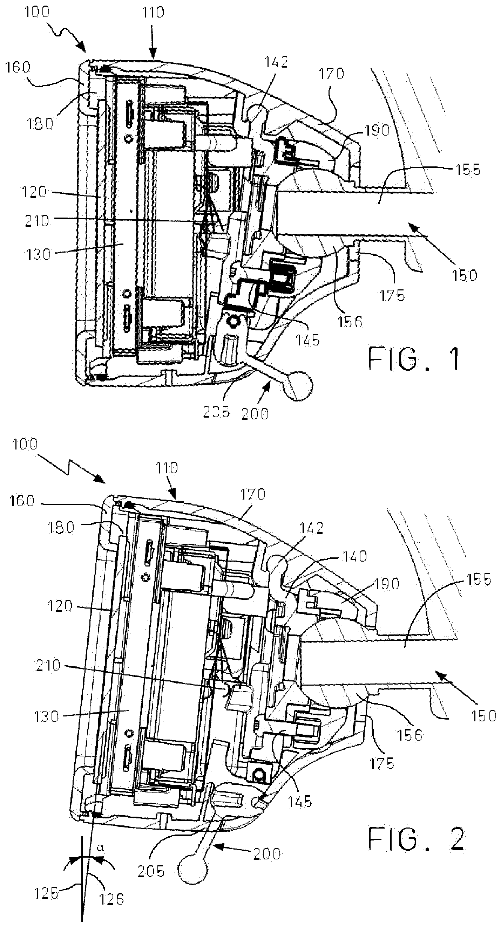

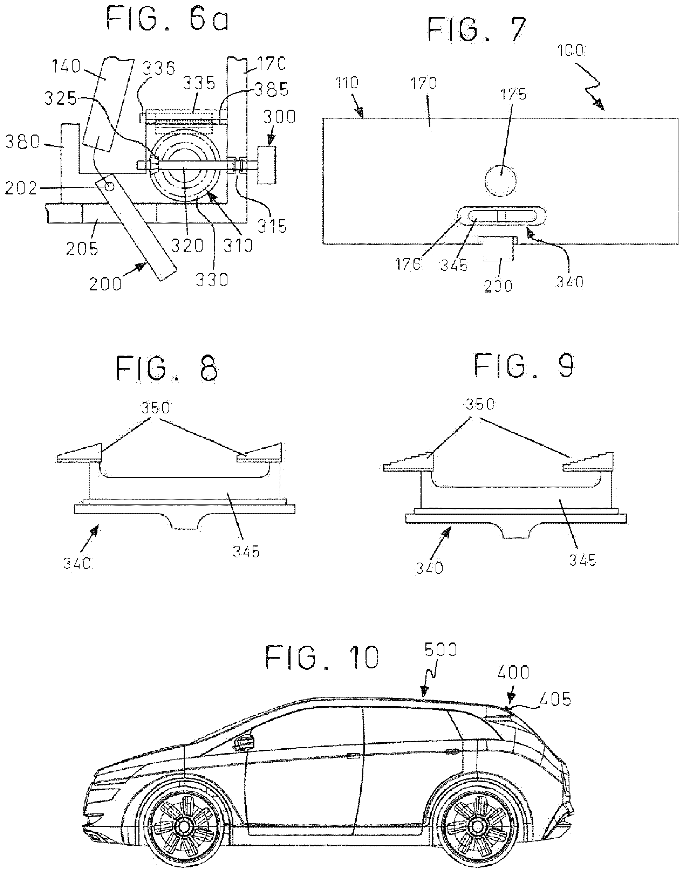

Examples of the present rear-view mirror system are shown in the figures comprising a rear-view mirror assembly indicated as a whole in figures 1-7 by the reference numeral 100 and a rear-view camera device indicated as a whole in figure 10 by the reference numeral 400.

The rear-view mirror assembly 100 is intended to be installed in the interior of a motor vehicle such as a car, a van, a truck and similar vehicles. In the particular example of figure 10 the rear-view mirror system comprises a rear-view mirror assembly 100 installed in a car 500.

In the example shown, the rear-view mirror assembly 100 includes a mirror housing 110 inside of which a half-mirror 120, a display 130 and a driving plate 140 are received.

The half-mirror 120 in this example is a glass substrate coated on its back surface with a thin layer of metal oxides such that a certain amount of light is reflected allowing the rest of the light to pass through. This allows the driver or a vehicle passenger to look toward the rear of the car 500.

The display 130 is mounted inside the mirror housing 110 in a position substantially parallel to the half-mirror 120 as shown in figures 1-5. The purpose of the display 130 is to display rear-view images captured by a rear-view camera device 400.

As shown in figure 10 of the drawings, the rear-view camera device 400 includes a video camera 405. The video camera 405 is arranged in a top rear part of the car 500 for capturing at least a field of view of the vehicle rear equivalent to that of a half-mirror 120 which is displayed on the display 130.

In the specific example disclosed herein, the display 130 comprises a back light unit including a light guide and a light source such as a set of LEDs for generating and directing light with a rear polarizer for polarizing the light in a first direction, a LCD open cell which is divided into pixels that receive information of light intensity and RGB code, and a front polarizer for polarizing the light in a second direction.

The mirror housing 110 is pivotally fixed to a vehicle inner support 150 that is rigidly fixed to the interior of the motor vehicle windshield. The vehicle inner support 150 may be any suitable support such as a swivel mount or a support assembly comprising a stem 155 with a ball 156 such as it will be described further below.

The mirror housing 110 comprises a frame 160 and a rear cover 170. The half-mirror 120 is fitted inside the mirror housing 110 enclosed by a rubber pad 180 to improve adjustment with the mirror housing frame 160.

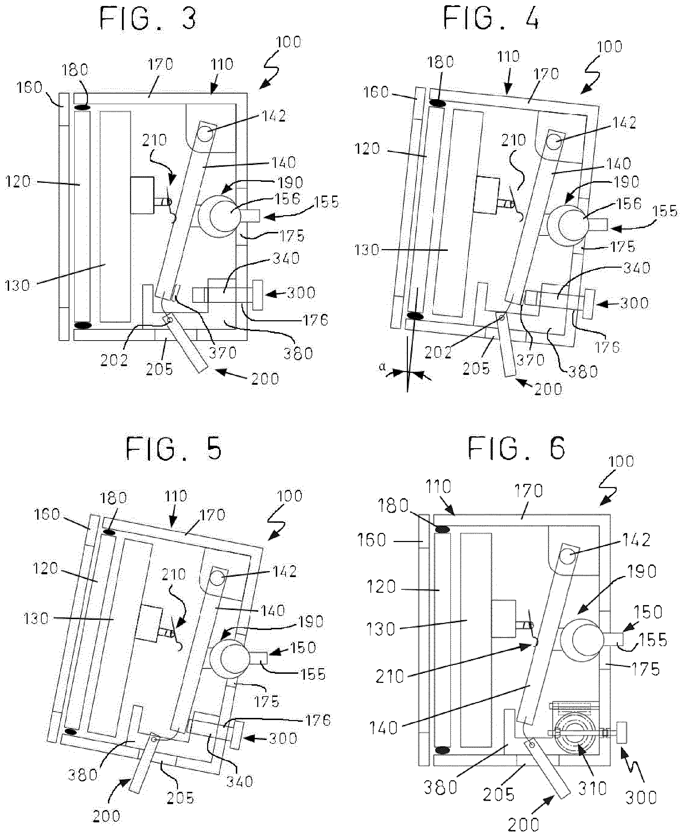

The above mentioned driving plate 140 is pivotally coupled to the mirror housing 110 therein around pivot point 142. The driving plate 140 is adapted for attachment to the vehicle inner support 150. To this end, in this example, the driving plate 140 comprises two bodies attached to each other through screws 145 or any other suitable attaching means. One of the bodies is the driving plate main body itself, the other of the bodies being configured so as to have a ball socket 190. The ball socket 190 is adapted to be attached to the above mentioned vehicle inner support 150. Alternatively, the ball socket 190 may be an integral portion of the driving plate 140 as shown in figures 3-5.

In the above mentioned example of the vehicle inner support 150, it comprises a stem 155 the free end of which has a ball 156. The ball 156 is adapted to be rotatably coupled inside the above mentioned ball socket 190 of the driving plate 140. This defines a ball and socket joint. The stem 155 of the vehicle inner support 150 projects from an inner portion of the motor vehicle passing through an opening 175 formed in the rear cover 170 of the mirror housing 110. This may be clearly seen in figure 6 of the drawings. In this way, the mirror housing 110 can be manually adjusted, i.e. pivoted or tilted, by the user or driver to suitably adjust the field of view of the vehicle rear as desired.

The rear-view mirror assembly 100 further includes an actuator switch lever 200. The actuator switch lever 200 is arranged protruding out from the mirror housing 110 through a recess 205 formed therein. This allows the actuator switch lever 200 to be easily operated by the user or driver. The actuator switch lever 200 is pivotally attached to the driving plate 140 through pivot point 202. The actuator switch lever 200 is also pivotally attached to the mirror housing rear cover 170. Thus, rotation of the actuator switch lever 200 by the user or driver causes the mirror housing 110 to be positioned from a first angular position 125, as shown in figure 1, to a second, different angular position 126, as shown in figure 2. Reference numerals to housing angular positions 125, 126 are shown in figure 2.

The ball and socket joint 156, 190 is designed such that the force that is required to rotate the driving plate 140 relative to the vehicle inner support 150 is greater than the force that is required to rotate the driving plate 140 relative to the rear cover 170. Thus, as the actuator switch lever 200 is actuated by the user or driver, the actuator switch lever 200 does not cause the driving plate 140 to be rotated but causes rotation of the mirror housing 110, with the driving plate 140 remaining substantially stationary. In this way, the half-mirror 120 is caused to be displaced from a first mirror housing angular position 125 to a second mirror housing angular position 126 through a determined angle α as indicated in figure 2 of the drawings.

In the first angular position 125 of the mirror housing 110 that is shown in figure 1, where both the half-mirror 110 and the display 130 are substantially in a vertical position, the driving plate 140 is arranged such that it contacts an electrical contact 210 of the switch in the display 130. This causes the display 130 to be switched off, no image is displayed and the user or driver only sees the field of view of the vehicle rear through the image reflected by the half-mirror 110 acting as a conventional mirror.

When the actuator switch lever 200 is rotated by the user or driver such that the mirror housing 110 is positioned in a second angular position 126 as shown in figure 2, where both the mirror housing 110, with the half-mirror 110 and the display 130 therein, are tilted, the driving plate 140 is arranged such that it does not contact the electrical contact 210 of the switch in the display 130. This results in that the display 130 is switched on so an image of the field of view of the vehicle rear is displayed. In this second angular position 126 of the mirror housing 110, the user only sees the field of view of the vehicle rear through the image displayed by the display 130 of the rear-view mirror assembly 100 because the second angular position 126 was adjusted adequately for this purpose.

Therefore, regardless of the angular position 125, 126 of the mirror housing 110 inside the vehicle, the field of view of the vehicle rear is always perceived by the user either through the image reflected by the half-mirror 120 or through the image displayed by the display 130. The image reflected by the half-mirror 120 is no longer perceived by the driver concurrently with the image displayed by the display 130 as in prior art devices, and therefore inconvenient double image effects are advantageously avoided.

As stated above, the second angular position 126 of the mirror housing 110 can be adjusted. Referring now to figure 2 of the drawings, this is carried out by means of an adjustable positioning mechanism 300. The adjustable positioning mechanism 300 allows a plane of the half-mirror 120 to be inclined in said two different angular positions 125, 126 by an angle α between 3° and 9°. Other range of angles α may be possible.

Two different examples of the adjustable positioning mechanism 300 are now described with reference to figures 3-9 of the drawings. Specifically, a first example of the adjustable positioning mechanism 300 is shown in figures 3-5 and 7-9 of the drawings, and a second example of the adjustable positioning mechanism 300 is shown in figures 6-6a of the drawings.

Referring now to the first example of the adjustable positioning mechanism 300 according to figures 3-5 and 7-9 of the drawings, the adjustable positioning mechanism 300 comprises a sliding member 340. The sliding member 340 is displaceably mounted in the mirror housing 110 along an opening or guide recess 176 formed in the rear cover 170 as shown in figure 7. As shown in figures 8 and 9 of the drawings, the sliding member 340 comprises a U-shaped base body 345 whose branches have respective wedged portions 350. A first example of wedged portions 350 having a smooth surface is shown in figure 8, while a second example of wedged portions 350 having a stepped surface is shown in figure 9. Stepped wedged portions 350 allow the angle of inclination α to be adjusted in a stepwise manner which may be preferred. In the particular example shown in figure 9 every step in the wedged portion 350 corresponds to an angle of inclination α of about 0.5° - 1°. In the particular example shown in figure 8, the smooth surface of the wedged portions 350 allows the angle of inclination α to be adjusted in a continuous manner. A stepwise opening or guide recess 176 in combination with the example shown in figure 8 where the wedged portions 350 have a smooth surface also allow the angle of inclination α to be adjusted in a stepwise manner.

In any case, the wedged portions 350 are adapted to abut corresponding wedged portions 370 formed in the driving plate 140, as shown in figures 3 and 4. The sliding member 340 can be thus moved by the user or the manufacturer sideways along the guide recess 176 of the rear cover 170 as shown in figure 7 such that the wedged portions 350 contact the corresponding wedged portions 370 of the driving plate 140 locking the driving plate 140 in a desired mirror housing angular position 125, 126. The stepped surfaces in the wedged portions 350, 370 allow the angle α defined by the plane of the half-mirror 120 to be adjusted in discrete, different mirror housing angular positions.

In the second example of the adjustable positioning mechanism 300 shown in figures 6 and 6a of the drawings, it comprises a gear driven mechanism 310. The gear driven mechanism 310 consists of a rod 320 that is rotatably mounted in the rear cover 170 of the mirror housing 110 as shown in figure 6. The rod 320 has a bevel gear 325 at one end thereof meshing with a first threaded portion of a gear wheel 330 that is formed in an upper surface thereof. The gear wheel 330 is rotatably mounted on a fixed positioning mechanism 380 fitted in the rear cover 170 of the mirror housing 110 which will be described further below. The gear wheel 330 is also provided with a second threaded portion that is formed in a lateral surface thereof meshing with a displaceable rack 335. The rack 335 is mounted in the rear cover 170 so that it can be displaced along a guide 385 formed therein as shown in detail in figure 6a of the drawings. The rack 335 is provided with a stop member 336 at one end thereof arranged to abut the driving plate 140 so as to change the different mirror housing angular positions. Thus, rotation of the rod 320 causes rotation of the gear wheel 330 which in turn causes the rack 335 to be displaced along the guide 385 to change the angular end position of the driving plate 140 and consequently that of the mirror housing 110.

A disengaging mechanism 315 is provided which serves the purpose of causing the rod 320 to freely rotate so as not to cause displacement of the rack 335. The disengaging mechanism 315 in the example shown is associated with the rod 320 as illustrated in figures 6 and 6a. The disengaging mechanism 315 in this example comprises a sliding portion in the rear cover 170 allowing the rod 320 to slide through the rear cover 170 according to a rod engagement position and a rod disengagement position as it will be described below.

In the rod disengagement position, the rod 320 is not allowed to move further into the rear cover 170 so that the bevel gear 325 does not engage the gear wheel 330 resulting in the rod 320 to freely rotate. Therefore, in the rod disengagement position, rotation of the rod 320 does not cause displacement of the rack 335.

In the rod engagement position, the rod 320 is allowed to move through the rear cover 170 when pushed by the user until the bevel gear 325 engages the gear wheel 330. Therefore, in the rod engagement position, rotation of the rod 320 causes displacement of the rack 335.

Although not shown in the drawings, in a further example of the adjustable positioning mechanism 300 the rod 320 would be replaced with a worm screw. In this case, the gear wheel 330 would have a first diameter body with a first threaded portion meshing with the worm screw and a second diameter body having a second threaded portion meshing with the rack. Operation will be the same as in the above example. The above described disengaging mechanism 315 could be likewise applied to this further example.

Referring now to the fixed positioning mechanism 380 shown in figures 3-6a of the drawings, it comprises a U-shaped body suitable to limit movement of the mirror housing 110 between the angular positions 125, 126 corresponding to the end stroke of the movement of the actuator switch lever 200. The fixed positioning mechanism 380 might comprise first and second limiting walls fixed to the rear cover 170 of the mirror housing 110 adapted to limit movement of the mirror housing 110.

It is to be noted that the angular positions 125, 126 of the mirror housing 110 referred to in the present disclosure refer to end angular positions corresponding to the end stroke of the actuator switch lever 200. Between the end positions of the mirror housing 110, the mirror housing 110 may be positioned according to a number of different angular positions as desired by the user or driver. The present rear-view mirror assembly 100 allows at least one of such end angular positions 125, 126 to be varied such that they are not fixedly predefined as in prior art rear-view mirror assemblies.

Although only a number of particular examples of the present rear-view mirror assembly, system and method of installation have been disclosed herein, it will be understood by those skilled in the art that other alternative examples and/or uses and obvious modifications and equivalents thereof are possible.

For example, the wedged portions 350 of the sliding member 340 could be projections projecting outwards from the base body 340 of the sliding member 340 or they could be recesses formed inwards into the base body 340 of the sliding member 340 or even a combination of projections and recesses.

On the other hand, the disengaging mechanism has been described for causing the rod to freely rotate so as not to cause displacement of the rack by disengaging the rod from the gear wheel or from the rack such that rotation of the rod does not cause displacement of the rack. However, the disengaging mechanism could alternatively operate with all such parts, i.e. the rod, the gearwheel and the rack, engaged with each other while still preventing the rack to be displaced as the rod is rotated. In this case, for example, the rod could be provided with a sliding threaded portion that can be arranged in a first position engaged with an inner threaded wall of the rod such that rotation of the sliding threaded portion causes rotation of the rod and thus displacement of the rack. In a second position, the sliding threaded portion is disengaged with the inner threaded wall of the rod such that the sliding threaded portion rotates freely, that is, it does note cause rotation of the rod and therefore the rack is not caused to be displaced.

Thus, the present disclosure covers all possible combinations of the particular examples described. The scope of the present disclosure should not be limited by particular examples, but should be determined only by a fair reading of the claims that follow.

Reference signs related to drawings and placed in parentheses in a claim, are solely for attempting to increase the intelligibility of the claim, and shall not be construed as limiting the scope of the claim.

## Claims

1. A rear-view mirror assembly (100) for motor vehicles (500), the assembly (100) comprising:
- a half-mirror (120) and a display (130) which are attached to a mirror housing (110), and a driving plate (140) that is pivotally coupled to the mirror housing (110) and adapted for attachment to an interior of the motor vehicle (500);
- an actuator switch lever (200) pivotally attached to the driving plate (140) for moving the mirror housing (110) between two different angular end positions (125, 126) corresponding to the end stroke of the actuator switch lever (200), between which end angular positions (125, 126) the mirror housing (110) can be positioned causing the display (130) to be switched on or off depending on a given mirror housing angular positions and causing the half-mirror 120 to be displaced from a first mirror housing angular end position (125) to a second mirror housing angular end position (126) through a determined angle (a); **characterized in that** it further comprises an adjustable positioning mechanism (300) for adjusting at least one of said mirror housing angular end positions (125, 126), the adjustable positioning mechanism (300) being adapted to adjust the determined angle (α).

2. The assembly (100) according to claim 1, where the determined angle (α) is adjusted in a range between 3° and 9°.

3. The assembly (100) according to any of the preceding claims, wherein the adjustable positioning mechanism (300) comprises a gear driven mechanism (310).

4. The assembly (100) according to claim 3, wherein the gear driven mechanism (310) comprises a rod (320) rotatably mounted in the mirror housing (110) meshing with a gearwheel (330) which in turn meshes with a rack (335) whose displacement defines end positions of the driving plate (140).

5. The assembly (100) according to claim 4, wherein it further includes a disengaging mechanism (315) adapted to cause the rod (320) to freely rotate so as not to cause displacement of the rack (335).

6. The assembly (100) according to claim 4 or 5, wherein at least one of the mirror housing (110) and the actuator switch lever (200) has an opening (176) for driving the gear driven mechanism (310) from the outside in order to change the range of mirror housing angular positions.

7. The assembly (100) according to any of claims 1 or 2, wherein the adjustable positioning mechanism (300) comprises a sliding member (340) displaceably mounted in the mirror housing (110), the sliding member (340) comprising at least one wedged portion (350) adapted to abut the driving plate (140) in a range of different mirror housing angular positions.

8. The assembly (100) according to claim 7, wherein the wedged portion (350) is at least partially stepped so as to adjust the angle (α) defined by a plane of the half-mirror (120) in discrete, different mirror housing angular positions.

9. The assembly (100) according to claim 7 or 8, wherein the mirror housing (110) has an opening (176) for driving the sliding member (340) from the outside in order to change the range of mirror housing angular positions.

10. The assembly (100) according to any of the preceding claims, wherein the driving plate (140) includes a vehicle attaching portion (190) for attaching the driving plate (140) to the interior of the motor vehicle (500).

11. The assembly (100) according to any of the preceding claims, wherein the driving plate (140) has a contact portion for contacting at least one electrical contact (210) for switching the display (130) on or off depending on the angular position (125, 126) of the mirror housing (110).

12. A rear-view mirror system for motor vehicles, the system comprising the rear-view mirror assembly (100) according to any of claims 1-11 and a rear-view camera device (400) for capturing images from the outside of the vehicle (500) to be displayed on the display (130).

13. A method for installing a rear-view mirror assembly (100) in a motor vehicle (500) comprising providing a rear-view mirror assembly (100) according to any of claims 1-11 and adjusting the adjustable positioning mechanism (300) of the rear-view mirror assembly (100) for determining at least one mirror housing angular position (125, 126).

14. The method according to claim 13, wherein said mirror housing angular position (125) causes the display (130) to be switched off.

## Patentansprüche

1. Eine Rückspiegelanordnung (100) für Kraftfahrzeuge (500), wobei die Anordnung (100) folgendes umfasst:
- einen Halbspiegel (120) und einen Bildschirm (130), die an einem Spiegelgehäuse (110) befestigt sind, und eine Mitnehmerscheibe (140), die drehbar am Spiegelgehäuse (110) montiert ist und angepasst zur Befestigung an einem Innenraum des Kraftfahrzeuges (500) ist;
- einen Aktorschalthebel (200), der drehbar an der Mitnehmerscheibe (140) zur Bewegung des Spiegelgehäuses (110) zwischen zwei verschiedenen Winkelendpositionen (125, 126) entsprechend dem Endhub des Aktorschalthebels (200) angeordnet ist, zwischen dessen Endwinkelpositionen (125, 126) das Spiegelgehäuse (110) angeordnet werden kann, wodurch der Bildschirm (130) in Abhängigkeit von gegebenen Winkelpositionen des Spiegelgehäuses an- oder ausgeschaltet werden kann und wodurch der Halbspiegel (120) von einer ersten Spiegelgehäusewinkelendposition (125) bis zu einer zweiten Spiegelgehäusewinkelendposition (126) durch einen festgelegten Winkel (a) versetzt werden kann; **dadurch gekennzeichnet, dass** sie weiterhin einen verstellbaren Positioniermechanismus (300) zur Einstellung von mindestens einer von den Spiegelgehäusewinkelendpositionen (125, 126) umfasst, wobei der einstellbare Positioniermechanismus (300) angepasst ist, um den festgelegten Winkel (a) einzustellen.

2. Die Anordnung (100) nach Anspruch 1, wobei der festgelegte Winkel (a) in einem Bereich zwischen 3° und 9° eingestellt ist.

3. Die Anordnung (100) nach einem der vorhergehenden Ansprüche, wobei der einstellbare Positioniermechanismus (300) einen Getriebemechanismus (310) umfasst.

4. Die Anordnung (100) nach Anspruch 3, wobei der Getriebemechanismus (310) eine Stange (320) umfasst, die drehbar im Spiegelgehäuse (110) montiert ist, die in ein Zahnrad (330) eingreift, das wiederum in eine Zahnstange (335) eingreift, deren Verschiebung Endpositionen der Mitnehmerscheibe (140) definiert.

5. Die Anordnung (100) nach Anspruch 4, wobei sie weiterhin einen Auslösemechanismus (315) umfasst, der angepasst ist, um eine freie Drehung der Stange (320) herbeizuführen, so dass keine Verschiebung der Zahnstange (335) herbeigeführt wird.

6. Die Anordnung (100) nach Anspruch 4 oder 5, wobei mindestens einer vom Spiegelgehäuse (110) und vom Aktorschalthebel (200) eine Öffnung (176) zum Antrieb des Getriebemechanismus (310) von außen hat, um den Bereich von Spiegelgehäusewinkelpositionen zu ändern.

7. Die Anordnung (100) nach einem der Ansprüche 1 oder 2, wobei der einstellbare Positioniermechanismus (300) ein verschiebbar im Spiegelgehäuse (110) montiertes Gleitstück (340) umfasst, wobei das Gleitstück (340) mindestens einen Keilteil (350) umfasst, der angepasst ist, um an die Mitnehmerscheibe (140) in einem Bereich von verschiedenen Spiegelgehäusewinkelpositionen anzugrenzen.

8. Die Anordnung (100) nach Anspruch 7, wobei der Keilteil (350) mindestens teilweise abgestuft ist, um den durch eine Ebene des Halbspiegels (120) definierten Winkel in einzelne verschiedene Spiegelgehäusewinkelpositionen einzustellen.

9. Die Anordnung (100) nach Anspruch 7 oder 8, wobei das Spiegelgehäuse (110) eine Öffnung (176) zum Antrieb des Gleitstücks (340) von außen hat, um den Bereich von Spiegelgehäusewinkelpositionen zu ändern.

10. Die Anordnung (100) nach einem der vorhergehenden Ansprüche, wobei die Mitnehmerscheibe (140) einen Fahrzeugbefestigungsteil (190) zur Befestigung der Mitnehmerscheibe (140) am Innenraum des Kraftfahrzeugs (500) umfasst.

11. Die Anordnung (100) nach einem der vorhergehenden Ansprüche, wobei die Mitnehmerscheibe (140) einen Kontaktteil zum Kontakt von mindestens einem elektrischen Kontakt (210) zur An- und Ausschaltung des Bildschirms (130) in Abhängigkeit von der Winkelposition (125, 126) des Spiegelgehäuses (110) hat.

12. Ein Rückspiegelsystem für Kraftfahrzeuge, wobei das System die Rückspiegelanordnung (100) nach einem der Ansprüche 1-11 und eine Rückfahrkameravorrichtung (400) zur Aufnahme von auf dem Bildschirm (130) von außerhalb des Fahrzeugs auszugebende Bildern (500) umfasst.

13. Ein Verfahren zur Montage von einer Rückspiegelanordnung (100) in einem Kraftfahrzeug (500) umfassend das Bereitstellen von einer Rückspiegelanordnung (100) nach einem der Ansprüche 1-11 und das Einstellen des einstellbaren Positioniermechanismus (300) der Rückspiegelanordnung (100) zur Feststellung von mindestens einer Spiegelgehäusewinkelposition (125, 126).

14. Das Verfahren nach Anspruch 13, wobei die Spiegelgehäusewinkelposition (125) das Ausschalten des Bildschirms (130) hervorbringt.

## Revendications

1. Un ensemble (100) rétroviseur arrière pour véhicules à moteur (500), l'ensemble (100) comprenant :
- un demi-miroir (120) et un écran (130) qui sont attachés à un boîtier de miroir (110), et un disque d'entraînement (140) qui est couplé à rotation au boîtier de miroir (110) est adapté pour l'attachement à une partie intérieure du véhicule à moteur (500) ;
- un levier de commutation d'actionneur (200) attaché à rotation au disque d'entraînement (140) pour le mouvement du boîtier de miroir (110) entre deux positions d'extrémité angulaires différentes (125, 126) correspondantes à la course finale du levier de commutation d'actionneur (200), entre lesquelles positions angulaires d'extrémité (125, 126) le boîtier de miroir (110) peut être positionné ce qui fait que l'écran (130) soit allumé ou éteint en fonction des positions angulaires du boîtier de miroir données et ce qui entraîne un déplacement du demi-miroir (120) d'une première position d'extrémité angulaire du boîtier de miroir (125) à une deuxième position d'extrémité angulaire du boîtier de miroir (126) à travers un angle déterminé (a) ; **caractérisé en ce qu'**il comprend en outre un mécanisme de positionnement ajustable (300) pour ajuster au moins une desdites positions d'extrémité angulaires du boîtier de miroir (125, 126), le mécanisme de positionnement ajustable (300) étant adapté pour ajuster l'angle déterminé (a).

2. L'ensemble (100) selon la revendication 1, dans lequel l'angle déterminé (a) est ajusté dans un intervalle d'entre 3° et 9°.

3. L'ensemble (100) selon l'une quelconque des revendications précédentes, dans lequel le mécanisme de positionnement ajustable (300) comprend un mécanisme entraîné par engrenage (310).

4. L'ensemble (100) selon la revendication 3, dans lequel le mécanisme entraîné par engrenage (310) comprend une tige (320) montée à rotation dans le boîtier du miroir (110) intervenant dans une roue dentée (330) qui à son tour intervient dans une crémaillère (335) dont le déplacement définit des positions d'extrémité du disque d'entraînement (140).

5. L'ensemble (100) selon la revendication 4, dans lequel il inclut en outre un mécanisme de débrayage (315) adapté de sorte que la tige (320) pivote librement afin de ne pas entraîner un déplacement de la crémaillère (335).

6. L'ensemble (100) selon la revendication 4 ou 5, dans lequel au moins un parmi le boîtier du miroir (110) et le levier de commutation d'actionneur (200) a une ouverture (176) pour actionner le mécanisme entraîné par engrenage (310) de l'extérieur afin de modifier l'intervalle de positions angulaires du boîtier de miroir.

7. L'ensemble (100) selon l'une quelconque des revendications 1 ou 2, dans lequel le mécanisme à positionnement ajustable (300) comprend un élément glissant (340) monté dans le boîtier du miroir (110) de manière à pouvoir être déplacé, l'élément glissant (340) comprenant au moins une partie cunéiforme (350) adaptée pour jouxter le disque d'entraînement (140) dans un intervalle de positions angulaires du boîtier de miroir différentes.

8. L'ensemble (100) selon la revendication 7, dans lequel la partie cunéiforme (350) est au moins en partie échelonnée afin d'ajuster l'angle (α) défini par un plan du demi-miroir (120) dans des positions angulaires du boîtier de miroir différentes et discrètes.

9. L'ensemble (100) selon la revendication 7 ou 8, dans lequel le boîtier du miroir (110) a une ouverture (176) pour actionner l'élément glissant (340) de l'extérieur afin de modifier l'intervalle de positions angulaires du boîtier de miroir.

10. L'ensemble (100) selon l'une quelconque des revendications précédentes, dans lequel le disque d'entraînement (140) inclut une partie d'attache au véhicule (190) pour attacher le disque d'entraînement (140) à l'intérieur du véhicule à moteur (500).

11. L'ensemble (100) selon l'une quelconque des revendications précédentes, dans lequel le disque d'entraînement (140) a une partie de contact pour le contacte d'au moins un contact électrique (210) pour allumer l'écran (130) ou l'éteindre en fonction des positions angulaires (125, 126) du boîtier de miroir (110).

12. Un système de rétroviseur pour véhicules à moteur, le système comprenant l'ensemble (100) rétroviseur arrière selon l'une quelconque des revendications 1-11 et un dispositif de caméra de vision arrière (400) pour capturer des images de l'extérieur du véhicule (500) destinées à être montrées dans l'écran (130)

13. Un procédé d'installation d'un ensemble (100) rétroviseur arrière dans un véhicule à moteur (500) comprenant fournir un ensemble (100) rétroviseur arrière selon l'une quelconque des revendications 1-11 et ajuster le mécanisme de positionnement ajustable (300) de l'ensemble (100) rétroviseur arrière afin de déterminer au moins une position angulaire du boîtier de miroir (125, 126).

14. Le procédé selon la revendication 13, dans lequel ladite position angulaire du boîtier de miroir (125) fait que l'écran (130) soit éteint.
